**Europäisches Patentamt**

**European Patent Office**

**Office européen des brevets**

(19)

(11) Numéro de publication: **0 035 437**
**B1**

## FASCICULE DE BREVET EUROPÉEN

(45) Date de publication du fascicule du brevet:
**15.01.86**

(51) Int. Cl.⁴: **G 01 N 15/02**

(21) Numéro de dépôt: **81400282.0**

(22) Date de dépôt: **23.02.81**

(54) **Procédé et dispositif de détermination du diamètre d'une particule en suspension dans un fluide par utilisation d'un rayonnement électromagnétique cohérent.**

(30) Priorité: **25.02.80 FR 8004113**

(43) Date de publication de la demande:
**09.09.81 Bulletin 81/36**

(45) Mention de la délivrance du brevet:
**15.01.86 Bulletin 86/3**

(84) Etats contractants désignés:
**AT BE CH DE FR GB IT LI LU NL SE**

(56) Documents cité:
**EP-A-0 018 458**
**US-A-3 851 169**

**APPLIED OPTICS, vol. 18, no. 2, 15 octobre 1979, New York, US,G. GREHAN et al. "Mie, theory calculations: new progress, with emphasis on particle sizing", pages 3489-3493**
**APPLIED OPTICS, vol. 18, no. 10, 15 mai 1979,New York, US,D. HOLVE et al. "Optical particle sizing for in situ measurements. I" pages 1632-1645**
**APPLIED OPTICS, vol. 17, no. 21, 1 novembre 1978 E. HIRLEMAN et al. "Intensity distribution properties of a Gaussain laser beam focus", pages 3496-3499**
**APPLIED OPTICS, vol. 16, no. 3, mars 1977,New York, US,J.WU "Fast moving suspended particles: measurements of their size and velocity", pages 596-600**
**APPLIED OPTICS, vol. 7, no. 6 juin 1968, New York, US,D. WALSH "Laboratory measurement of multiple scattering of coherent optical radiation", pages 1213-1219**

(73) Titulaire: **ANVAR Agence Nationale de Valorisation de la Recherche, 43, rue Caumartin, F-75436 Paris Cédex 09 (FR)**

(72) Inventeur: **Grehan, Gérard, 15, rue Bargteheide, 76250 Deville les Rouen (FR)**
Inventeur: **Gouesbet, Gérard, Parc de Cerisy 13, rue du Pays de Caux, 76130 Mont- Saint- Aignan (FR)**
Inventeur: **Rabasse, Christiane, 24, Avenue des Aigles, F-76240 Bonsecours (FR)**

(74) Mandataire: **Phélip, Bruno, c/o Cabinet Harlé & Phélip 21, rue de la Rochefoucauld, F-75009 Paris (FR)**

(56) Documents cité: (suite)
**APPLIED OPTICS, vol. 14, no. 3, mars 1975, New York, US,D. COOKE et al. "Response calculations for light-scattering aerosol particle counters", pages 734-739**
**Applied Optics, Vol. 8, No. 1, 1969, p. 155-164**
**Annalen der Physik, 1908, vierte Folge, Bd. 25, p. 377-445**
**F. Durst et H. Umhauer, rapport SFB 80/EM/81, Université de Karlsruhe, Février 1976**
**Optics Letters, Vol. 3, No. 1, 1978, p. 19-21**
**Journal of the Air Pollution Control Association, Vol. 23, No. 12, 1973, p. 1035-1038**
**Applied Optics, Vol. 5, No. 5, 1966, p. 839-843**
**Industrial and Engineering Chemistry, Vol. 61, No. 2, 1969, p. 8-20**

## Description

La présente invention est relative à un procédé et un dispositif de détermination du diamètre des particules en suspension dans un fluide.

A la différence d'autres méthodes de détermination, les méthodes optiques fondées sur l'étude de la lumière renvoyée par la particule ont l'avantage de ne pas perturber ou supprimer l'écoulement du fluide dans lequel les particules sont en suspension, et par conséquent de ne pas empecher la détermination simultanée de la vitesse de la particule.

On pourrait tenter de determiner les dimensions de particules de gros diamètres, plus de 100 micromètres par exemple par application des lois de l'optique géométrique, en éclairant les particules par un faisceau de lumière blanche et en étudiant la lumière qui est renvoyée dans une direction perpendiculaire à la lumière incidente.

On a pu montrer (cf. l'article de J. V. Dave, Applied Optics, Vol. 8, no. 1, 1969, p. 155-164), qu'une telle méthode ne serait pas satisfaisante pour les particules transparentes de diamètre inférieur à 100 micromètres.

Il était tentant d'utiliser, dans le domaine où ces méthodes ne sont pas applicables, les rayonnements électromagnétiques cohérents, tels qu'émis par un laser. Il était également tentant d'utiliser ces mêmes rayonnements cohérents quelle que soit la taille des particules, afin de profiter des intensités lumineuses plus grandes et des autres avantages inhérents au rayonnement laser. Cependant, on se trouve confronté alors avec des problèmes tout à fait nouveaux pour la raison que la diffusion de tels rayonnements n'est pas en général régie par les lois de l'optique géometrique mais par celles de Lorenz-Mie, qui en sont différentes. Ces lois sont utilisables ici, en gros, pour des particules dont le diamètre va de 0,5 à 200 micromètres et au-delà (cf. G. Mie "Beiträge zur Optik trüber Medien", Annalen der Physik, 1908, IV. Folge, Band 25).

Si, par application des lois de Lorenz-Mie, on détermine par le calcul l'intensité du rayonnement diffusé dans différentes directions pour un rayonnement de nature donnée (longueur d'onde, polarisation) frappant une particule donnés, et si on porte le résultat de ces calculs sur un diagramme polaire centré sur la particule, on obtient une figure comportant un certain nombre de lobes, avec des minima accusés dans des directions privilegiées, la position et la taille des lobes variant avec le rayonnement incident et avec les caractéristiques de la particule, en particulier sa taille.

On conçoit, en conséquence, qu'il soit théoriquement possible, si le rayonnement ne varie pas et si la nature de la particule est constante, de déterminer la taille d'une particule à partir de l'intensité du rayonnement diffusé dans une direction fixée à l'avance.

En pratique, on se heurte à certaines difficultes. L'une d'elles est que le déplacement des lobes du diagramme polaire évoque plus haut en fonction de la dimension de la particule fait que la relation entre l'intensité diffusée et le diamètre de la particule n'est pas bi-univoque: à une intensité donnée peuvent correspondre plusieurs valeurs du diamètre.

Pour éliminer cette difficulté, on a proposé (F. Durst et H. Umhauer, rapport SFB 80/EM/81, Université de Karlsruhe, Février 1976) d'utiliser de la lumière blanche.

Les irrégularités des courbes exprimant, pour une longueur d'onde donnée, la relation entre l'intensité de lumière diffusée et le diamètre de la particule, sont à des endroits différents pour des longueurs d'ondes différentes, et par suite on peut espérer obtenir une relation bi-univoque en utilisant de la lumière blanche, ce qui se verifie en particulier lorsqu'on observe la lumière diffusée dans une direction perpendiculaire au rayonnement incident. Ce procédé présente l'inconvénient qu'il est impossible de focaliser la lumière blanche de façon uniforme à une grande distance d'un systàme optique de focalisation; il est donc impossible d'étudier des courants de fluide de grande section ou à des temperatures élevées. On se heurte, de plus, à des problemes de discrimination de la lumière parasite en particulier celle émise par les particules elles-mêmes sous l'influence de la température. Un tel procédé ne trouve donc d'application que dans des domaines assez limités, tels que des études biologiques.

L'emploi d'une lumière monochromatique oblige à trouver d'autres méthodes pour résoudre le problème causé par l'existence de relations non bi-univoques entre le diamètre de la particule et l'intensité diffusée. On se heurte en outre à un nouveau problème qui est le suivant: pour obtenir une intensité suffisante, on est obligé de recourir à un faisceau laser, mais les émetteurs laser actuellement disponibles délivrent un faisceau lumineux où l'intensité de l'énergie n'est pas homogène dans une section mais suit une loi gaussienne avec un maximum sur l'axe du faisceau. Diverses méthodes ont été proposées pour tenir compte de cette particularité ou même pour en tirer profit, soit en analysant la variation dans le temps de l'énergie diffusée par une particule traversant le faisceau (cf. E. Dan Hirleman, Optics Letters, vol. 3, no. 1, Juillet 1978, p. 19-21) soit en comparant les intensités diffusées par la particule au même moment dans des directions faisant des angles différents avec l'axe du faisceau incident (cf. C.C. Gravatt, Journal of the Air Pollution Control Association, Vol. 23, no. 12, Décembre 1973, p.1035-1038, ou J. Raymond Hodkinson, Applied Optics, Vol. 5, no. 5, Mai 1966, p. 839-543). Les méthodes ainsi proposées conduisent à des appareillages compliqués. De plus, la gamme de diamètres dans laquelle ces procédés sont utilisables est limitée. Il ressort des publications mentionnées ci-dessus et relatives à la comparaison des intensités diffusées dans des directions différentes que la largeur de la gamme où cette méthode est exploitable est d'autant plus large qu'on est prés de l'axe du faisceau incident. On est donc poussé à placer les capteurs prés de l'axe du rayonnement incident, ce qui pose des difficultés supplémentaires pour éviter l'influence perturbatrice de celui-ci.

En fait, il ressort d'un article de Don Holve et Sidney A. Self (Applied Optics, Vol. 18, no. 10, 15 Mai 1979, p. 1632-1645), divulguant les caractéristiques des préambule des revendications 1 et 7, que le choix de l'angle $\theta_c$ fait par la direction de mesure avec la direction du faisceau incident résulte d'un compromis entre plusieurs exigences:

a) pour limiter la longueur du volume de mesure il faut un angle $\theta_c$ grand, le plus voisin de 90° possible (p. 1634 colonne gauche, 4e alinea) et on a été obligé d'abandonner la géométrie coaxiale (c'est-à-dire $\theta_c = 0$ en raison de difficultés à limiter dans ce cas la longueur du volume de mesure (p. 1635 colonnne droite, 2e alinea).

b) pour obtenir une relation bi-univoque entre le signal et la taille des particules, on est obligé d'avoir $\theta_c$ aussi petit que possible (p. 1634, colonne gauche, 4e alinea).

Le résultat de ce compromis est un angle $\theta_c$ de 10 à 20° (p. 1634, colonne gauche, 5e alinea).

Cela conduit naturellement à des installations allongées donc coûteuses, et dont l'implantation peut se révéler difficile.

La présente invention a donc pour but de fournir un procédé de mesure de diamètre des particules dans une plage comprenant au moins les diamètres compris entre 0,5 et 200 micromètres, et qui puisse être mis en oeuvre avec un appareillage simple et peu coûteux, et de fournir un tel appareillage.

Un autre but de l'invention est de fournir une telle méthode qui puisse en outre être facilement combinée avec une méthode de mesure simultanée de la vitesse de la même particule, ainsi que l'appareillage correspondant.

La présente invention fournit donc un procédé de détermination du diamètre d'une particule en suspension dans un fluide par utilisation d'un rayonnement électromagnétique cohérent, procédé dans lequel on envoie un faisceau sensiblement parallèle dudit rayonnement électromagnétique sur ladite particule, on collecte le rayonnement diffusé par ladite particule dans une direction choisie et on définit le diamètre de la particule en utilisant le rapport entre l'énergie diffusée sans ladite direction et l'énergie du rayonnement incident, caractérisé en ce qu'on détermine, pour la matière des particules à étudier, un angle minimal d'écartement entre la direction de l'axe du faisceau et la direction de collecte du rayonnement diffusé, cet angle étant situé au-delà, en partant des angles faibles, de la plage où la relation entre l'énergie diffusée et le diamètre des particules n'est pas suffisamment bi-univoque pour la qualité de mesures envisagées, on choisit une direction de collecte du rayonnement s'écartant de l'axe du faisceau incident d'un angle au moins égal à cet angle minimal, et en ce qu'on place sur le trajet du rayonnement incident, avant qu'il n'atteigne la particule, un système correcteur de faisceau calculé pour que la densité d'énergie du faisceau ayant traversé ledit système soit sensiblement constante sur toute la section du faisceau à l'exception d'une partie périphérique où cette densité décroit rapidement en s'éloignant de l'axe.

La présente invention fournit de même un dispositif tel qu'il est décrit à la revendication 7.

La présente invention a pour point de départ la découverte que, de façon inattendue, lorsqu'on s'écarte suffisamment de l'axe du faisceau incident, la relation de l'énergie diffusée au diamètre tend à devenir à nouveau bi-univoque. L'angle auquel ce fait peut être considéré comme acquis avec une précision suffisante pour les besoins de la pratique dépend de la nature de la particule; par exemple, un écart de 20° environ entre l'axe du rayon incident et celui de rayon diffusé qu'on étudie est suffisant en générale si la particule est en une matière très opaque, alors que si elle est transparente il faut s'approcher de 90°.

Le fait que la relation soit bi-univoque ne signifie pas nécessairement que les lobes du diagramme polaire auquel on a fait allusion plus haut aient disparu, ni qu'ils restent immobiles quand la taille de la particule varie. Il suffit en effet que la variation de l'énergie diffusée dans un déplacement des lobes soit, pour une variation donnée de la taille de la particule, inférieure à celle qui correspond à la variation d'ensemble de cette énergie qui, on le sait, augmente avec la taille de la particule.

Il peut paraître étonnant qu'une telle constatation n'ait pas encore été faite alors que la théorie de Mie date de 1908. La cause en est peut-être dans le fait que cette théorie conduit à des calculs qui son de plus en plus complexes lorsqu'on étudie des particules de plus en plus grosses, et que les calculs simplifiés sont de moins en moins utilisables à mesure que l'on s'écarte de la direction du faisceau incident, surtout si la particule est grosse et peu transparente. Les chercheurs ont fait porter leurs études d'abord sur les petits angles; on a d'ailleurs constaté, comme il est dit plus haut, que si on utilise les rapports entre intensités diffusées, il est plus avantageux en théorie de ne pas prendre d'angles trop grands.

Ce n'est qu'avec l'aide des programmes de calcul mis au point par les inventeurs que l'investigation a pu atteindre les tailles et indices de réfraction importants.

Toutefois, le choix d'angles importants mettant à profit cette découverte ne permettrait pas à lui seul d'aboutir à un procédé exploitable s'il n'était pas combiné à des moyens pour assurer la constance de l'énergie à travers toute la section du faisceau indcident. Il est en effet absurde de parler de relations bi-univoques entre l'énergie diffusée et la taille de la particule si cette énergie diffusée dépend de la distance de la particule à l'axe du faisceau, car une même énergie diffusée pourra correspondre à deux particules différentes, la plus grosse passant vers le bord du faisceau et la plus petite près de son axe.

L'emploi d'un système correcteur pour assurer un éclairement uniforme est classique en optique traditionelle. Il a été également associé à l'utilisation d'un faisceau laser (cf. l'article de David H. Walsh, Applied Optics, Vol. 7, no. 6, juin 1968, p. 1213-1219) pour obtenir un éclairement à peu près uniforme dans une chambre de grand volume (91 X 91 X 91 cm) afin d'étudier la diffusion créée par un aérosol non-absorbant, mais jusqu'ici il n'avait pas été proposé d'utiliser cette technique pour créer un faisceau lumineux de densité constante, ce faisceau ayant une section largement supérieure à la dimension des particules étudiées (0,5 à 200 micromètres), mais toutefois suffisamment petite pour éliminer ou réduire considérablement les situations où deux particules sont en même temps dans le faisceau. On conçoit que les exigences de constance de densité lumineuse sont bien plus grandes dans ce cas, car aucun effet de moyenne n'existe à un moment donné.

La présente invention sera maintenant exposée plus en détail à l'aide d'un exemple de réalisation d'un appareillage pour la mise en oeuvre du procédé, illustré par les dessins, parmi lesquels:

Fig. 1 est un schéma d'ensemble d'une réalisation d'un appareil selon l'invention, et

Fig. 2 est un schéma d'ensemble d'une variante de l'appareil de la figure 1.

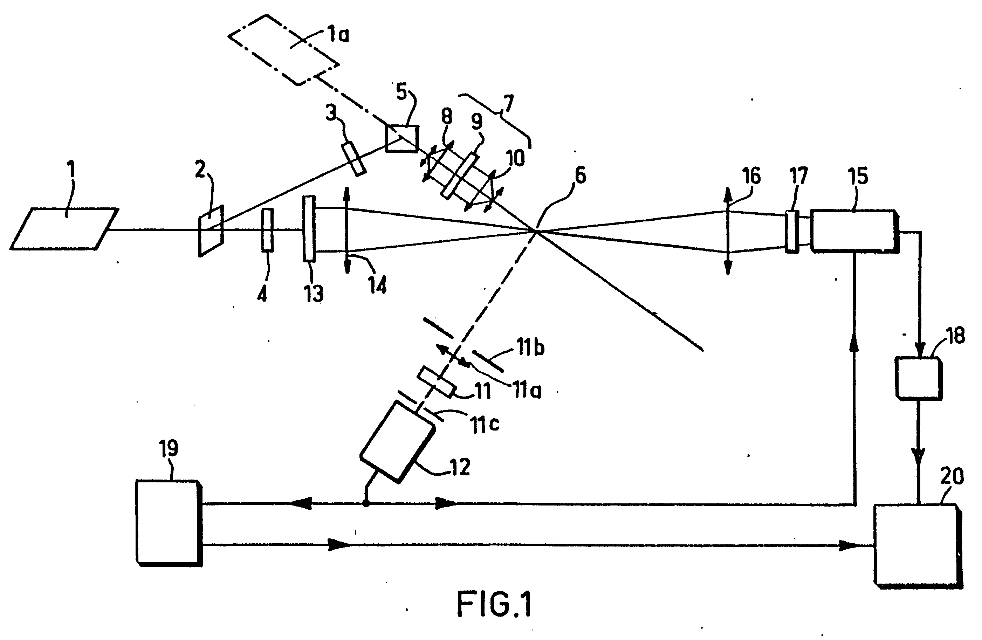

Le dispositif décrit à la figure 1 permet la mesure simultanée de la vitesse et du diamètre des particules individuelles.

Il comprend un émetteur laser 1 à argon capable d'émettre simultanément des radiations de deux longueurs d'ondes différentes. Une lame semi-transparente 2 divise le faisceau en deux faisceaux partiels, et sur chaque faisceau partiel un filtre spécifique 3, 4 ne laisse passer qu'une longueur d'onde. On a ainsi, pour simplifier l'exposé, un faisceau "bleu" et un faisceau "vert". Un miroir 5 dévie l'un des faisceaux pour le diriger vers l'autre dans la zone de mesure 6. Le faisceau bleu sert à la détermination du diamètre. Il traverse, avant d'atteindre la zone de mesure, un correcteur de faisceau désigné dans son ensemble par 7 et qui comprend un premier système afocal 8 qui produit un faisceau parallèle considérablement plus large que le faisceau entrant, un filtre correcteur 9 dont la densité d'absorption est plus forte au centre qu'à la périphérie, et un second système afocal 10 qui ramène le diamètre du faisceau à une valeur convenable de l'ordre de grandeur de celle du faisceau entrant. La raison de la présence des deux systèmes afocaux est simplement que la densité d'énergie du faisceau laser est telle que, si elle n'était réduite par élargissement du faisceau, le filtre correcteur 9 serait rapidement mis hors d'usage par échauffement. La fabrication du filtre et les réglages sont également plus faciles. Les caractéristiques du système afocal 8 sont calculées pour que l'énergie absorbée par le filtre 7 soit dissipée sans élévation excessive de température. Les caractéristiques du système afocal 10 sont fixées pour définir les dimensions de la zone de mesure, qui doit être assez large pour permettre un comptage assez rapide mais assez étroite pour éliminer les comptages multiples.

Le faisceau laser corrigé, tel que sortant d'un tel dispositif, comprend une partie centrale où la densité de rayonnement est uniforme, et une partie périphérique où cette densité décroit rapidement en s'éloignant de l'axe. Cette partie périphérique peut être éliminée par un diaphragme approprié. Il est également possible de l'éliminer par voie électronique: en effet, l'intensité diffusée par une particule traversant un tel faisceau commence par croitre à la traversée de la partie périphérique, puis est constante pendant la traversée de la partie centrale, et décroit ensuite à la seconde traversée de la zone périphérique. Il est possible d'éliminer du comptage les particules qui émettent un signal dont la partie constante, c'est-à-dire celle où le signal varie peu dans le temps, a une durée inférieure à une valeur fixée à l'avance.

On peut éliminer ainsi, également, les particules qui passeraient trop au bord de la zone centrale et qui donneraient ainsi des valeurs douteuses, une partie de leur surface restant en dehors de cette zone centrale.

Il est possible, au moins en théorie, d'utiliser des systèmes correcteurs de type différent de celui décrit plus haut, comportant, par exemple des lentilles de forme non sphérique, mais de telles lentilles sont difficiles à obtenir et d'un coût élevé. Avec de tels dispositifs on n'éviterait pas les problèmes mentionnés ci-dessus d'élimination des particules qui ne passent pas suffisamment près du milieu de la zone centrale du faisceau, et ces problèmes pourraient être résolus de manière analogue.

Le dispositif d'étude de la lumière diffusée est disposé avec son axe perpendiculaire au faisceau bleu incident. Il comprend un filtre 11 destiné à éliminer les lumières parasites, et en particulier celle du faisceau vert, une lentille 11a qui sert à conjuguer le champ de mesure avec le récepteur, un diaphragme 11b pour limiter l'ouverture du faisceau étudié, une fente 11c pour régler la dimension du champ de mesure et un photomultiplicateur 12 de type classique. Dans la pratique, le diaphragme 11b limite à 4° environ l'ouverture du faisceau étudié, mais elle peut être élargie, comme on le verra plus loin.

Le faisceau vert est affecté à la mesure simultanée de la vitesse de la particule dont on détermine le diamètre.

Dans une autre version de l'appareil, on utilise deux lasers différents 1, 1a monochromatiques, fournissant l'un le faisceau "bleu" pour la détermination des diamètres, l'autre le faisceau "vert" pour la détermination de la vitesse. Sur la figure 1 on a représenté en tirets le laser 1a affecté à la détermination des diamètres et le faisceau "bleu" qui en sort. Dans cette construction, le laser 1 ne sert qu'à la détermination de la vitesse, la lame semi-transparente 2, les filtres 3, 4 et le miroir 5 sont supprimés. Cette variante est plus simple que la première, mais elle exige deux lasers au lieu d'un.

La partie de l'appareillage correspondant à la mesure de vitesse fait appel à la méthode décrite dans l'article de John L. Angus et al. "Motion Measurement by Laser Doppler Techniques" dans Industrial and Engineering Chemistry, Vol. 61, no. 2, Février 1969, pages 8 et suivantes. Elle comprend un séparateur de faisceaux 13 qui produit deux faisceaux parallèles qui sont envoyés en direction de la zone de mesure 6 grâce à une lentille 14. Un second photomultiplicateur 15 est situé sur la bissectrice de l'angle formé par les deux faisceaux et précédé d'une lentille 16 et d'un filtre 17 pour éliminer les rayonnements ne correspondant pas au faisceau vert.

Le photomultiplicateur est relié à un analyseur 18 qui détermine la fréquence Doppler et l'élargissement de cette fréquence qui correspond aux fluctuations de cette vitesse.

Les signaux du photomultiplicateur 12 sont envoyés d'une part au photomultiplicateur 15, de façon à déclencher la prise en compte des signaux issus de ce dernier lorsqu'une particule est présente dans la zone de mesure, et d'autre part à un circuit électronique 19 d'acquisition de données relatives aux amplitudes. Les signaux émis par l'analyseur 18 et par le circuit 19 d'analyse d'amplitude sont envoyés au dispositif 20 d'enregistrement par une même chaîne des données simultanées d'amplitude (ou diamètre) et de fréquence (ou vitesse).

Le circuit 19 peut comprendre les moyens de discrimination des signaux correspondant à des particules qui ne passent pas dans la partie centrale ou passent trop près de ses bords, comme indiqué plus haut.

Dans une réalisation préférée, on met à profit le fait que le dispositif correcteur de faisceau permet d'obtenir un champ de mesure pour la détermination de diamètre qui est plus large que le champ de mesure pour la détermination de vitesse. Typiquement, le champ de mesure de diamètre des particules a la forme d'un tronçon de cylindre. Le diamètre de ce cylindre est celui de la partie centrale du faisceau "bleu", c'est-à-dire celle où la densité de rayonnement est uniforme, et il est de l'ordre de 600 micromètres; la longueur du champ de mesure de diamètre des particules est réglée par la fente 11c, et on la choisit de l'ordre de 50 à 1000 micromètres, cette longueur étant à peu près 10 fois le diamètre des particules à étudier.

Le champ de mesure de vitesse des particules a en gros la forme d'un ellipsoïde allongé dont le plus grand diamètre est de 300 micromètres et le plus petit diamètre de 50 micromètres environ. On voit que si les deux champs de mesure sont convenablement placés l'un par rapport à l'autre, le champ de mesure de vitesse est en entier à l'intérieur du faisceau "bleu". Dans ces conditions, il n'est pas forcément nécessaire de prévoir les moyens électroniques décrits plus haut pour eliminer du comptage les particules qui ne passent pas dans la zone centrale du faisceau bleu, en passant trop près de son bord. Cette élimination peut être obtenue de façon beaucoup plus simple en éliminant, dans le dispositif 20 d'enregistrement, tout signal de détermination de diamètre pour lequel la particule ne donne pas un signal de détermination de vitesse en coïncidence.

Les autres procédés d'élimination des signaux de diamètre correspondant à des particules en position non correcte sont évidemment nécessaires lorsqu'on ne procède pas à une détermination simultanée de la vitesse.

On notera que, de toute façon, le dispositif d'enregistrement fournit, ou permet de calculer de façon tres simple, la concentration des particules dans le milieu fluide qui les porte. Cette concentration se déduit en effet du nombre de particules mesurées pendant un temps donné, des dimensions du champ de mesure, et de la vitesse relative de déplacement des particules par rapport au champ de mesure.

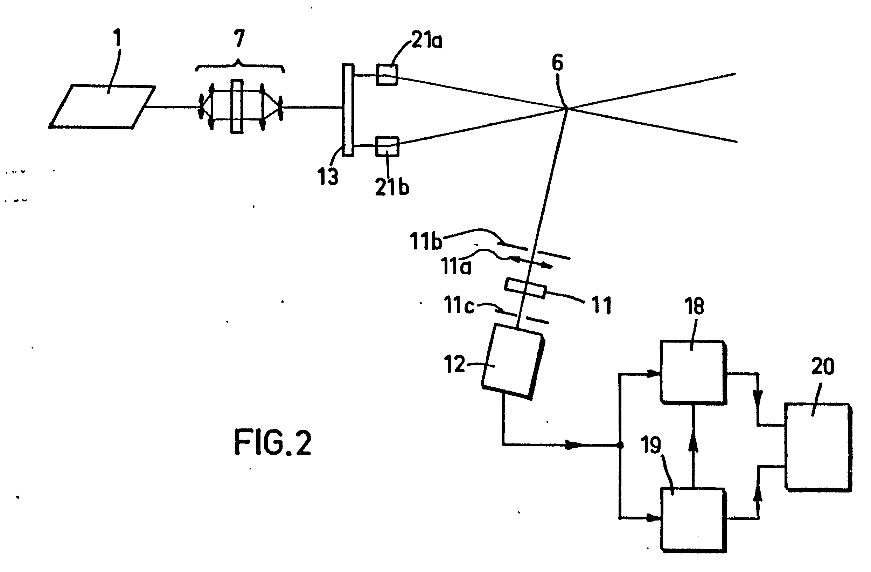

La figure 2 est relative à une autre forme de réalisation du dispositif selon l'invention, et qui permet la détermination simultanée de diamètre et de la vitesse des particules.

La zone de mesure 6 reçoit le rayonnement de deux faisceaux laser corrigés, dont la densité de rayonnement est uniforme dans la partie centrale. Ces deux faisceaux sont disposés pour produire un champ d'interférence utilisable pour des mesures par effet Doppler. Ils sont obtenus à partir d'un faisceau unique, issu d'un laser 1 et corrigé par un correcteur de faisceau 7 du même type que celui décrit plus haut. Un diviseur de faisceau 13 placé sur le trajet du faisceau corrigé fournit deux faisceaux parallèles qui sont déviés par deux miroirs 21a, 21b pour se rencontrer sur la zone de mesure 6.

Le dispositif d'étude comprend comme dans le cas de la figure 1 un photomultiplicateur 12 précédé d'une lentille 11a, d'un diaphragme 11b et d'une fente 11c. Un filtre 11 n'est pas nécessaire en l'absence de lumière parasite. Ces eléments sont placés de telle façon que, pour l'un et l'autre des deux faisceaux incidents, on est dans les conditions où existe une relation bi-univoque entre l'énergie diffusée et le diamètre de la particule.

L'électronique qui traite les signaux sortant du photomultiplicateur tient compte du fait que ces signaux sont porteurs de deux sortes d'informations: d'une part l'amplitude globale du signal correspondant à une particule correspond au diamètre de cette particule, et d'autre part, ce signal comporte une modulation à une fréquence élevée qui est la fréquence Doppler, laquelle correspond à la vitesse de la particule. Les signaux sont donc envoyés d'une part à un analyseur 18 qui détermine la fréquence Doppler et l'élargissement de cette frequence qui correspond aux fluctuations de la vitesse, et d'autre part à un circuit 19 d'acquisition de données relatives aux amplitudes, qui comporte des moyens pour éliminer du comptage les signaux correspondant à des particules qui ne sont pas dans une position correcte par rapport au champ de mesure, ainsi qu'il a été indiqué plus haut.

Les signaux sortant de l'analyseur 18 et du circuit 19 sont envoyés au dispositif 20 d'enregistrement de données simultanées de diamètre, de vitesse et de concentration ainsi qu'il a été expliqué plus haut.

Ce deuxième mode de réalisation présente l'avantage d'une plus grande simplicité, par utilisation d'un seul récepteur. En revanche, la précision est réduite par l'augmentation des perturbations au bord des faisceaux et le champ de mesure est élargi, ce qui peut être gênant.

Des dispositifs selon l'invention conviennent pour une très large gamme de dimension de particules opaques ou transparentes, et en particulier des particules de 0,5 à 200 micromètres.

Dans le cas de particules transparentes, il est possible d'améliorer la précision sur la mesure des diamètres en élargissant l'angle de collecte du rayonnement diffusé, par action sur le diaphragme 11b de façon à reduire les irrégularités de la courbe de l'intensité en fonction du diamètre.

Bien entendu, quoiqu'on ait ici parlé de diamètre, des particules non sphériques peuvent être étudiées. On détermine alors un diamètre apparent.

L'étalonnage de l'appareil ne peut être fait uniquement par le calcul en raison du manque de précision des données qu'on peut avoir sur les constituants tels que les photomultiplicateurs. Dans la pratique, on détermine par le calcul la forme de la courbe (signal) /(diamètre de particule) et on procède au "calage" de celle-ci à l'aide d'un échantillon de particules de dimensions connues, déterminées par microscope par exemple.

Dans le cas de particules de forme irrégulière, il peut être préférable de construire de façon expérimentale la courbe d'étalonnage, à l'aide d'un nombre suffisant d'échantillons.

## Revendications:

1. Procédé de détermination du diamètre d'une particule en suspension dans un fluide par utilisation d'un rayonnement électromagnétique cohérent, procédé dans lequel on envoie un faisceau sensiblement parallèle dudit rayonnement électromagnétique sur ladite particule, on collecte le rayonnement diffusé par ladite particule dans une direction choisie et on définit le diamètre de la particule en utilisant le rapport entre l'énergie diffusée dans ladite direction et l'énergie du rayonnement incident, caractérisé en ce qu'on détermine,pour la matière des particules à etudier, un angle minimal d'écartement entre la direction de l'axe du faisceau et la direction de collecte du rayonnement diffusé, cet angle étant situé au-delà, en partant des angles faibles, et le diamètre des particules n'est pas suffisamment bi-univoque pour la qualité de mesures envisagées, on choisit une direction de collecte du rayonnement s'écartant de l'axe du faisceau incident d'un angle au moins égal à cet angle minimal, et en ce qu'on place sur le trajet du rayonnement incident, avant qu'il n'atteigne la particule,un système correcteur de faisceau calculé pour que la densité d'énergie du faisceau ayant traversé ledit système soit sensiblement constante sur toute la section du faisceau à l'exception d'une partie périphérique où cette densité décroit rapidement en s'éloignant de l'axe.

2. Procédé selon la revendication 1, caractérisé en ce qu'on utilise un système correcteur qui comprend successivement un système afocal pour élargir la section du faisceau,un filtre correcteur et un système afocal pour réduire la section du faisceau.

3. Procédé selon l'une des revendications 1 ou 2, caractérisé en ce qu'on élimine par voie électronique les signaux correspondant à des particules se trouvant dans la partie périphérique non homogène du faisceau corrigé.

4. Procédé selon la revendication 3, caractérisé en ce que ladite élimination est effectuée sur les signaux dont la partie constante a une durée inférieure à une valeur fixée à l'avance.

5. Procédé selon l'une des revendications 1 à 4, caractérisé en ce qu'on procède simultanément à la détermination de la vitesse de la même particule par méthode Doppler, et on traite les signaux correspondant au diamètre et à la vitesse de chaque particule dans un même ensemble électronique.

6. Procédé selon la revendication 5, caractérisé en ce qu'on détermine avec le même ensemble électronique la concentration de particules en suspension dans le fluide.

7. Dispositif pour la détermination du diamètre de particules en suspension dans un fluide, comportant des moyens (19) capables le convertir le rapport entre l'énergie diffusée dans une direction déterminée sous l'effet d'un rayonnement incident et l'énergie dudit rayonnement incident en une mesure de diamètre de particule, ce dispositif également comportant un émetteur (1) d'un faisceau incident parallèle de rayonnement électromagnétique cohérent, disposé pour envoyer ledit faisceau vers la particule, et un collecteur (12) d'un rayonnement diffusé par la particule quand elle se trouve dans ledit faisceau, et étant caractérisé en ce que le collecteur (12) est placé pour recevoir le rayonnement qui est diffusé dans une direction qui fait avec celle du faisceau incident un angle situe au-delà, en partant des angles faibles, de la plage où la relation entre l'énergie diffusée et le diamètre des particules n'est pas suffisamment bi-univoque pour la qualité de mesures envisagées, en ce que sur le trajet du faisceau incident, entre l'émetteur et la particule, est interpose un système correcteur (7) capable de rendre la densité d'énergie sensiblement constante sur pratiquement toute la section du faisceau à l'exception d'une partie périphérique où cette densité décroit rapidement en s'éloignant de l'axe.

8. Dispositif selon la revendication 7, caractérisé en ce que le système correcteur comporte un filtre correcteur (9) dont la densité d'absorption est plus forte au centre qu'à la périphérie, placé entre un premier système afocal (8) qui produit un faisceau parallèle plus large que le faisceau entrant, et un second système afocal (10) qui ramène la largeur du faisceau à une valeur convenable pour la mesure.

9. Dispositif selon la revendication 7 ou 8, caractérisé en ce que le collecteur (12) est un photomultiplicateur qui émet des signaux électriques qui sont traités dans un circuit électronique (19) d'acquisition de données relatives aux amplitudes desdits signaux.

10. Dispositif selon la revendication 9, caractérisé en ce que ledit circuit électronique (19) comprend des moyens pour éliminer les signaux correspondant à des particules passant en dehors de la partie centrale à densité homogène du faisceau incident corrige.

11. Dispositif selon la revendication 10, caractérisé en ce que lesdits moyens d'élimination comprennent des moyens de détermination de la durée de la partie à intensité constante d'un signal et des moyens pour éliminer un signal quand ladite durée est inférieure à une valeur fixée à l'avance.

12. Dispositif selon la revendication 7, caractérisé en ce qu'il comprend en outre des moyens pour déterminer par méthode Doppler la vitesse de la particule, ces moyens comportant une source (1, 1a) d'un faisceau de rayonnement électromagnétique cohérent, un séparateur de faisceaux (13) qui produit deux faisceaux parallèles, une lentille (14) qui fait converger ces deux faisceaux vers une zone de mesure qui a le même centre que la zone de mesure de diamètre, et un photomultiplicateur (15) relié à un analyseur (18) qui détermine la fréquence Doppler, cet analyseur faisant partie d'un ensemble électronique (18, 19, 20) qui traite en même temps les informations fournies par le collecteur (12) et relatives à l'intensité du rayonnement diffusé par la même particule.

13. Dispositif selon la revendication 12, caractérisé en ce que le champ de mesure de la vitesse de particule est entièrement compris dans le faisceau de mesure du diamètre de particule, et en ce que l'ensemble électronique (18, 19, 20) comprend des moyens pour éliminer du comptage les signaux de détermination de diamètre de particules qui ne sont pas en coïncidence avec des signaux de détermination de vitesse.

14. Dispositif selon la revendication 12 ou 13, caractérisé en ce qu'il comprend un émetteur unique (1) de rayonnement électromagnétique qui émet sur deux longueurs d'onde, et des moyens (2, 3, 4) pour diviser le faisceau émis en deux faisceaux de longueurs d'onde différentes dont l'un sert à la détermination de diamètre et l'autre à la détermination de vitesse.

15. Dispositif selon la revendication 12, caractérisé en ce qu'il comprend des moyens pour obtenir, à partir de l'émetteur (1), deux faisceaux corrigés utilisables pour la détermination de diamètre de la particule, ces deux faisceaux étant dirigés sur la particule dans des conditions qui donnent naissance à des fréquences Doppler, en ce qu'il comprend un seul détecteur (12), placé pour recevoir le rayonnement qui est diffusé dans une direction qui fait avec celle de chacun des deux faisceaux corrigés un angle supérieur audit angle minimal, et en ce qu'il comprend des moyens (18, 19, 20) pour utiliser, à la fois l'information d'intensité de rayonnement diffusée contenue dans les signaux sortant du détecteur (12) et l'information de fréquence Doppler contenue dans les mêmes signaux.

**Patentansprüche**

1. Verfahren zum Bestimmen des Durchmessers eines in einer Flüssigkeit suspendierten Teilchens unter Verwendung kohärenter elektromagnetischer Strahlung, bei dem man ein im wesentlichen paralleles Bündel solcher elektromagnetischer Strahlung auf das besagte Teilchen richtet, die durch dieses in einer ausgewählten Richtung gestreute Strahlung sammelt und den Durchmesser des Teilchens mittels des Verhältnisses zwischen der in dieser Richtung gestreuten Energie und der Energie der einfallenden Strahlung bestimmt, dadurch gekennzeichnet, dass man für den Stoff der zu untersuchenden Teilchen den kleinsten Ablenkungswinkel zwischen der Richtung der Achse des Bündels und der Richtung bestimmt, in der man die gestreute Strahlung sammelt, wobei dieser Winkel, mit kleinen Winkeln beginnend, über dem Bereich liegt, wo die Beziehung zwischen der gestreuten Energie und dem Teilchendurchmesser nicht genügend eindeutig in beiden Richtungen für die Güte der betreffenden Messungen ist, eine Strahlungssammelrichtung wählt, die um einen jenem kleinsten Winkel mindestens gleichen Winkel von der Achse des einfallenden Bündels abgelenkt ist, und dass man in den einfallenden Strahlengang, bevor dieser das Teilchen erreicht, ein Bündelkorrektionssystem einsetzt, das so berechnet ist, dass die Energiedichte des dieses System passierenden Bündels über dessen ganzen Abschnitt weitgehend konstant ist, mit Ausnahme eines Umfangsteils, wo diese Dichte mit der Entfernung von der Achse rasch abnimmt.

2. Verfahren nach Anspruch 7, dadurch gekennzeichnet, dass man ein Korrektionssystem verwendet, das nacheinander ein afokales System zur Verbreiterung des Bündelabschnitts, ein Korrektionsfilter und ein afokales System zur Verengung des Bündelabschnitts umfasst.

3. Verfahren nach einem der Ansprüche 1 oder 2, dadurch gekennzeichnet, dass man die den sich im inhomogenen Umfangsteil des korrigierten Bündels befindlichen Teilchen entsprechenden Signale elektronisch ausscheidet.

4. Verfahren nach Anspruch 3, dadurch gekennzeichnet, dass diese Ausscheidung für die Signale erfolgt, bei denen die Dauer des konstanten Teils einen vorbestimmten Wert unterschreitet.

5. Verfahren nach einem der Ansprüche 1 bis 4, dadurch gekennzeichnet, dass man gleichzeitig eine Bestimmung der Geschwindigkeit desselben Teilchens nach der Dopplermethode vornimmt und die dem Durchmesser und der Geschwindigkeit jeden Teilchens entsprechenden Signale in derselben elektronischen Anordnung verarbeitet.

6. Verfahren nach Anspruch 5, dadurch gekennzeichnet, dass man mit derselben elektronischen Anordnung die Konzentration der in der Flüssigkeit suspendierten Teilchen bestimmt.

7. Vorrichtung zum Bestimmen des Durchmessers von in einer Flüssigkeit suspendierten Teilchen, bestehend aus Mitteln (19), die das Verhältnis zwischen der unter der Einwirkung einer einfallenden Strahlung in einer bestimmten Richtung gestreuten Energie und der Energie der besagten einfallenden Strahlung in ein Mass des Teilchendurchmessers umwandeln können, wobei diese Vorrichtung ferner einen Strahler (1) für das einfallende parallele Bündel kohärenter elektromagnetischer Strahlung umfasst, der so angeordnet ist, dass er dieses Bündel zum Teilchen hin aussendet, und einem Sammler (12) für die durch das Teilchen gestreute Strahlung, wenn sich diese im besagten Bündel befindet, dadurch gekennzeichnet, dass der Sammler (12) zum Empfang der Strahlung angeordnet ist, die in einer Richtung gestreut ist, die mit derjenigen des einfallenden Bündels einen Winkel bildet, der, mit kleinen Winkeln beginnend, über dem Bereich liegt, wo die Beziehung zwischen der gestreuten Energie und dem Teilchendurchmesser nicht genügend eindeutig in beiden Richtungen für die Güte der betreffenden Messungen ist, dass im Gang des einfallenden Bündels zwischen dem Strahler und dem Teilchen ein Korrektionssystem (7) eingesetzt ist, das die Energiedichte über praktisch den ganzen Bündelabschnitt weitgehend konstant machen kann, mit Ausnahme eines Umfangsteils, wo diese Dichte mit der Entfernung von der Achse rasch abnimmt.

8. Vorrichtung nach Anspruch 7, dadurch gekennzeichnet, dass das Korrektionssystem ein Korrektionsfilter (9) enthält, dessen Absorptionsdichte in der Mitte grösser als am Rand ist und das zwischen einem ersten afokalen System (8), das ein paralleles Bündel produziert, das grösser als das Eingangsbündel ist, und einem zweiten afokalen System (10) angeordnet ist, das die Breite des Bündels auf einen für die Messung geeigneten Wert zurückbringt.

9. Vorrichtung nach Anspruch 7 oder 8, dadurch gekennzeichnet, dass der Sammler (12) ein Photovervielfacher ist, der elektrische Signale aussendet, die in einer elektronischen Schaltung (19) zur Erfassung von sich auf die Amplituden dieser Signale beziehenden Däten verarbeitet werden.

10. Vorrichtung nach Anspruch 9, dadurch gekennzeichnet, dass diese elektronische Schaltung (19) Mittel zur Ausscheidung von Signalen enthält, die ausserhalb des Mittelteils mit homogener Dichte des korrigierten einfallenden Bündels passierenden Teilchen entsprechen.

11. Vorrichtung nach Anspruch 10, dadurch gekennzeichnet, dass die besagten Ausscheidungsmittel Glieder zur Bestimmung der Dauer des konstanten Intensitätsteils eines Signals und Glieder zur Ausscheidung eines Signals enthalten, wenn dessen Dauer einen vorbestimmten Wert unterschreitet.

12. Vorrichtung nach Anspruch 7, dadurch gekennzeichnet, dass sie ferner Mittel zur Bestimmung der Teilchengeschwindigkeit nach der Dopplermethode enthält, wobei diese Mittel eine Quelle (1, 1a) eines Bündels kohärenter elektromagnetischer Strahlung, einen zwei parallele Bündel erzeugenden Bündelteiler (13), eine Linse (14), die diese beiden Bündel auf eine Messzone konvergieren lässt, deren Mittelpunkt mit der Messzone für den Durchmesser zusammenfällt, und einen Photovervielfacher (15) umfassten, der mit einem die Dopplerfrequenz bestimmenden Analysator (18) verbunden ist, wobei dieser Analysator Teil einer elektronischen Anordnung (18, 19, 20) ist, die gleichzeitig die von dem Sammler (12) kommenden, sich auf die Intensität der von demselben Teilchen gestreuten Strahlung beziehenden Daten verarbeitet.

13. Vorrichtung nach Anspruch 12, dadurch gekennzeichnet, dass sich das Messfeld der Teilchengeschwindigkeit völlig innerhalb des Messbündels für den Teilchendurchmesser befindet, und dass die elektronische Anordnung (18, 19, 20) Mittel enthält, welche Bestimmungssignale für den Durchmesser von Teilchen, die mit Geschwindigkeitsbestimmungssignalen nicht koinzident sind, aus der Zählung ausschliessen sollen.

14. Vorrichtung nach Anspruch 12 oder 13, dadurch gekennzeichnet, dass sie einen einzigen, bei zwei Wellenlängen sendenden elektromagnetischen Strahler (1) und Mittel (2, 3, 4) zur Teilung des ausgesandten Bündels in zwei Bündelverschiedener Wellenlänge enthält, von denen das eine der Durchmesserbestimmung und das andere der Geschwindigkeitsbestimmung dient.

15. Vorrichtung nach Anspruch 12, dadurch gekennzeichnet, dass sie Mittel enthält, um aus dem Strahler (1) zwei zur Bestimmung des Teilchendurchmessers verwendbare korrigierte Bündel zu erhalten, wobei diese beiden Bündel unter die Entstehung von Dopplerfrequenzen veranlassenden Bedingungen auf das Teilchen gerichtet werden, dass sie einen einzigen zum Empfang der Strahlung angeordneten Detektor (12) enthält, die in einer Richtung gestreut ist, die mit derjenigen der beiden korrigierten Bündel jeweils einen Winkel bildet, der grösser als der besagte kleinste Winkel ist, und dass sie Mittel (18, 19, 20) zur gleichzeitigen Heranziehung der in den aus dem Detektor (12) kommenden Signalen enthaltenen Information über die Intensität der gestreuten Strahlung und der in denselben Signalen enthaltenen Information über die Dopplerfrequenz enthält.

**Claims:**

1. Process for the determination of the diameter of a particle in suspension in a fluid by the use of coherent electromagnetic radiation, being a process in which a substantially parallel beam of the said electromagnetic radiation is directed at the said particle, the radiation diffused by the said particle in a selected direction is collected, and the diameter of the particle is determined by utilising the ratio between the energy diffused in the said direction and the energy of the incident radiation, characterised in that a determination is made, for the material of the particles to be investigated, of a minimum angle of separation between the direction of the axis of the beam and the direction of collection of the diffused radiation, this angle being - proceeding from small angles - beyond the range in which the relation between the diffused energy and the diameter of the particles does not exhibit a sufficient degree of one-to-one correspondence for the quality of measurements under consideration, a direction of collection of the radiation is selected which is separated from the axis of the incident beam by an angle which is at least equal to this minimum angle, and in that there is placed in the path of the incident radiation, before it reaches the particle, a beam correcting system which is computed in order that the energy density of the beam which has passed through the said system is substantially constant over the entire section of the beam with the exception of a peripheral portion in which this density decreases rapidly in a direction away from the axis.

2. Process according to Claim 1, characterised in that use is made of a correcting system which comprises in succession an afocal system to broaden the section of the beam, a correcting filter and an afocal system to reduce the section of the beam.

3. Process according to one of Claims 1 or 2, characterised in that the signals corresponding to particles which are situated in the nonhomogeneous peripheral portion of the corrected beam are eliminated by electronic means.

4. Process according to Claim 3, characterised in that the said elimination is carried out on the signals the constant portion of which has a duration less than a predetermined value.

5. Process according to one of Claims 1 to 4, characterised in that the speed of the same particle is simultaneously determined by the Doppler method, and the signals corresponding to the diameter and to the speed of each particle are processed in the same electronic assembly.

6. Process according to Claim 5, characterised in that the concentration of particles in suspension in the fluid is determined with the same electronic assembly.

7. Apparatus for the determination of the diameter of particles in suspension in a fluid, comprising means (19) capable of converting the ratio between the energy diffused in a specific direction under the influence of incident radiation and the energy of the said incident radiation into a measure of the particle diameter, this apparatus further comprising an emitter (1) of a parallel incident beam of coherent electromagnetic radiation, disposed to direct the said beam towards the particle, and a collector (12) of radiation diffused by the particle when it is situated in the said beam, and being characterised in that the collector (12) is placed to receive the radiation which is diffused in a direction which makes with that of the incident beam an angle which is - proceeding from small angles - beyond the range in which the relation between the diffused energy and the diameter of the particles does not exhibit a sufficient degree of one-to-one correspondence for the quality of measurements under consideration, and in that in the path of the incident beam there is interposed between the emitter and the particle a correcting system (7) capable of making the energy density substantially constant over practically the entire section of the beam with the exception of a peripheral portion in which this density decreases rapidly in a direction away from the axis.

8. Apparatus according to Claim 7, characterised in that the correcting system comprises a correcting filter (9) the absorption density of which is greater at the centre than at the periphery and which is placed between a first afocal system (8) which produces a parallel beam which is wider than the entering beam and a second afocal system (10) which reduces the width of the beam to a value which is suitable for the measurement.

9. Apparatus according to Claim 7 or 8, characterised in that the collector (12) is a photomultiplier which emits electrical signals which are processed in an electronic circuit (19) for the aquisition of data relating to the amplitudes of the said signals.

10. Apparatus according to Claim 9, characterised in that the said electronic circuit (19) comprises means for eliminating the signals corresponding to particles passing outside the central portion having homogeneous density of the corrected incident beam.

11. Apparatus according to Claim 10, characterised in that the said means for elimination comprise means for the determination of the duration of the constant intensity portion of a signal and means for eliminating a signal when the said duration is less than a predetermined value.

12. Apparatus according to Claim 7, characterised in that it further comprises means for determining the speed of the particle by the Doppler method, these means comprising a source (1, 1a) of a beam of coherent electromagnetic radiation, a beam separator (13) which produces two parallel beams, a lens (14) which causes these two beams to converge towards a measurement zone which has the same centre as the zone for measurement of diameter, and a photomultiplier (15) connected to an analyser (18) which determines the Doppler frequency, this analyser forming part of an electronic assembly (18, 19, 20) which at the same time processes the informations provided by the collector (12) and relating to the intensity of the radiation diffused by the same particle.

13. Apparatus according to Claim 12, characterised in that the field of measurement of the particle speed is entirely included within the beam for the measurement of the particle diameter, and in that the electronic assembly (18, 19, 20) comprises means for eliminating from the computation the signals for the determination of the diameter of particles which are not in coincidence with signals for the determination of speed.

14. Apparatus according to Claim 12 or 13, characterised in that it comprises a single emitter (1) of electromagnetic radiation which emits at 2 wavelengths and means (2, 3, 4) for dividing the emitted beam into two beams of different wavelengths, one of which serves for the determination of diameter and the other for the determination of speed.

15. Apparatus according to Claim 12, characterised in that it comprises means for obtaining from the emitter (1) two corrected beams which can be utilised for the determination of the diameter of the particle, these two beams being directed at the particle under conditions which give rise to Doppler frequencies, in that it comprises a single detector (12) placed to receive the radiation which is diffused in a direction which makes with that of each one of the two corrected beams an angle greater than the said minimum angle, and in that it comprises means (18,19,20) for utilising at the same time the information on the diffused intensity of radiation contained in the signals leaving the detector (12) and the Doppler frequency information contained in the same signals.

FIG.1

FIG.2

0 035 437